Europäisches Patentamt

European Patent Office

Office européen des brevets

(11) Veröffentlichungsnummer: **0 203 323 B1**

(12) **EUROPÄISCHE PATENTSCHRIFT**

(45) Veröffentlichungstag der Patentschrift: **21.08.91**

(51) Int. Cl.⁵: **B01D 53/04**

(21) Anmeldenummer: **86104667.0**

(22) Anmeldetag: **05.04.86**

(54) **Verfahren und Vorrichtung zur Reinigung und Anreicherung von Deponiegasen.**

(30) Priorität: **19.04.85 DE 3514168**

(43) Veröffentlichungstag der Anmeldung:
**03.12.86 Patentblatt 86/49**

(45) Bekanntmachung des Hinweises auf die
Patenterteilung:
**21.08.91 Patentblatt 91/34**

(84) Benannte Vertragsstaaten:
**AT BE CH DE FR GB IT LI NL SE**

(56) Entgegenhaltungen:
**US-A- 2 571 936**
**US-A- 3 116 130**
**US-A- 3 365 859**

(73) Patentinhaber: **LEYBOLD AKTIENGESELL-
SCHAFT**
**Bonner Strasse 498**
**W-5000 Köln 51(DE)**

(72) Erfinder: **Lindenberg, Dietrich**
**Kurt-Schumacher-Ring 80**
**W-6454 Bruchköbel(DE)**
Erfinder: **Schilling, Helmut**
**In der Gartel 1**
**W-6458 Rodenbach 1(DE)**

(74) Vertreter: **Leineweber, Jürgen, Dipl.-Phys.**
**Nagelschmiedshütte 8**
**W-5000 Köln 40(DE)**

## Beschreibung

Es ist bekannt, das in Deponien entstehende Gas (vorzugsweise Methan) zu sammeln und seinen Energiegehalt zu nutzen, sei es beim Betrieb von Gasmotoren oder - nach einer Anreicherung - durch Zufuhr in ein kommunales Gasversorgungssystem.

Deponiegase enthalten neben Schwefelwasserstoff eine Vielfalt von Verunreinigungen, die sich - mit fließenden Grenzen - aus hoch-, mittel- und niedrigsiedenden Bestandteilen zusammensetzen. Zu den Hochsiedern (Siedepunkt bei etwa 110° C) gehören Aromate, wie Toluol und Xylol, sowie Aldehyde. Viele Geruchsträger, wie Mercaptan, Aceton usw., sind zu den Mittelsiedern zu rechnen (Siedepunkt bei etwa 40° C). Schließlich gehören zu den Niedrigsiedern (Siedetemperatur bei etwa -15° C) Chlorkohlenwasserstoffe, wie Vinylchlorid, und Fluorchlorkohlenwasserstoffe. Die Vielzahl der vorkommenden Halogen-Kohlenwasserstoffe hat jedoch unterschiedliche Siedepunkte, so daß sie sowohl zu den Mittelsiedern als auch zu den Niedrigsiedern gezählt werden können.

Bei bisher bekannten Anlagen beschränkt sich die Reinigung der Deponiegase im wesentlichen auf die Entfernung von Schwefelwasserstoff. Dazu wird das Deponiegas bei einer Tempertur von 25° C und unter leichtem Überdruck über ein Eisenrasenerzbett, über eine Wäsche oder über Aktivkohle gefahren, um dadurch das $H_2S$ abzuscheiden. Danach wird das Gas direkt den Motoren oder den Anreicherungsanlagen zugeführt. An diesen nachgeschalteten Elementen treten deshalb erhebliche Schäden durch Korrosion auf, die zu häufigen Betriebsstörungen und -unterbrechungen führen.

Zum relevanten Stand der Technik gehört weiterhin der Inhalt der Schriften US-A-25 71 936 und US-A-33 65 859. Die zuerst genannte Schrift offenbart die Sorption von Kohlenwasserstoffen an Aktivkohle. Speziell wird ein Verfahren von Zyklohexan beschrieben, das in einer Mischung von Kohlenwasserstoffgasen vorliegt. Das Zyklohexan wird zusammen mit Olefinen und anderen aromatischen Kohlenwasserstoffen an im Gegenstrom sich bewegendem Adsorptionsmaterial angelagert. Die Gewinnung des Zykolhexans, d. h. die Separierung von Olefinen und Aromaten, erfolgt durch differenziertes Heizen der beladenen Aktivkohle. Die zweite US-Schrift beschreibt ein Verfahren zur Konzentrierung von Wasserstoff, der in einer aromatische und Paraffin-Kohlenwasserstoffe enthaltenen Gasmischung enthalten ist. Dabei werden drei Adsorber verwendet, die Aktivkohle enthalten und wechselweise betrieben werden. Sämtliche Adsorber sind identisch ausgebildet.

Der vorliegenden Erfindung liegt die Aufgabe zugrunde, ein Verfahren zur Reinigung und Anreicherung von Deponiegasen sowie eine dafür geeignete Einrichtung zu schaffen, welche eine wesentlich verbesserte Reinigung von Deponiegasen zulassen und insbesondere die Abscheidung von korrosiv wirkenden Bestandteilen ermöglichen.

Erfindungsgemäß wird diese Aufgabe durch die Merkmale der Patentansprüche gelöst. Durch diese Schritte können insbesondere die Halogen-Kohlenwasserstoffe vollständig aus den Rohgasen abgeschieden werden, bei deren Verbrennung neben Salzsäure auch Dioxine entstehen. Die nachgeschalteten Elemente sind deshalb vor Korrosionen geschützt. Dioxine, die mit dem Rauchgas in die Umwelt gelangen, können nicht mehr entstehen.

Besonders zweckmäßig ist es, wenn die Methan-Anreicherung, d. h. die Befreiung des Methans von Stickstoff, in einer an sich bekannten PSA-Anlage erfolgt. Dadurch entsteht Methan mit einem Reinheitsgrad, der die unmittelbare Einleitung in ein kommunales Gasversorgungssystem erlaubt. Gleichzeitig besteht die Möglichkeit, den in der PSA-Anlage abgeschiedenen Stickstoff als Regeneriergas für die Adsorber einzusetzen.

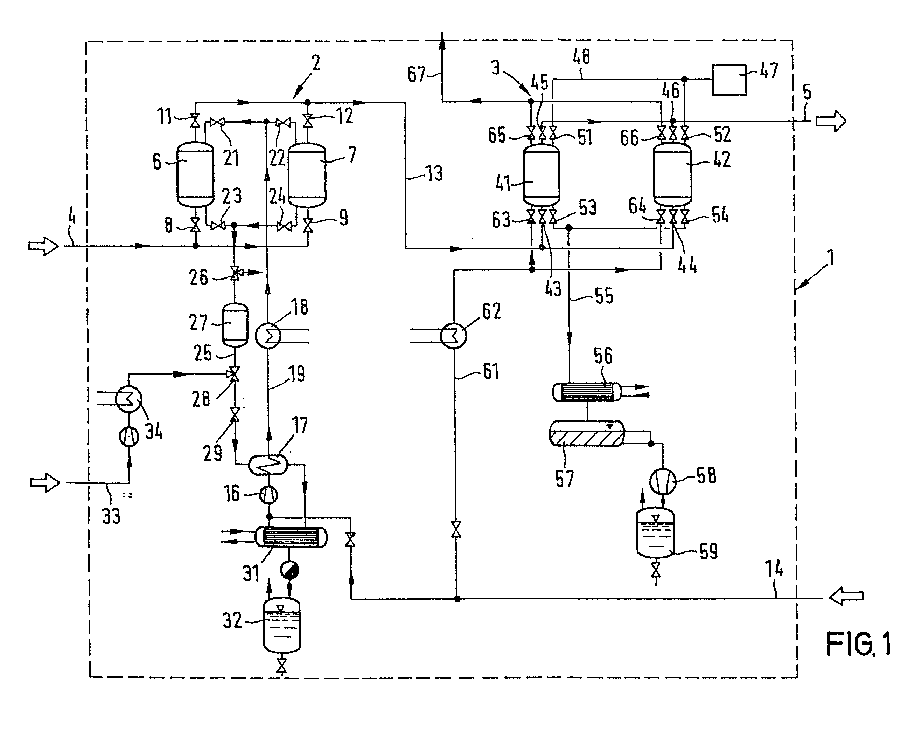

Weitere Vorteile und Einzelheiten der Erfindung sollen anhand von in den Figuren 1 bis 3 dargestellten Ausführungsbeispielen erläutert werden.

Figur 1 zeigt eine Anlage 1 mit zwei Adsorberpaaren 2 und 3. Über die Leitung 4 wird der Einrichtung bzw. der Anlage 1 von Schwefelwasserstoff und Feuchtigkeit ($\phi \leq 0,5$) befreites Deponiegas zugeführt. Der Leitung 5 wird gereinigtes Deponiegas entnommen.

Das erste Adsorberpaar 2 umfaßt zwei Adsorber 6 und 7, die hochaktive offenporige Aktivkohle enthalten, welche dazu geeignet ist, die Aromate und andere hochsiedende Bestandteile bei Raumtemperatur zu binden. Der Arbeitsdruck kann je nach Verwendungszweck des gereinigten Deponiegases zwischen 1 bar und 15 bar liegen.

Ein kontinuierlicher Betrieb wird dadurch erreicht, daß die Adsorber 6 und 7 wechselweise betrieben werden, d. h., jeweils ein Adsorber ist auf Adsorption und der andere auf Regeneration geschaltet. Dazu dienen die den Adsorbern 6 und 7 jeweils vor- bzw. nachgeordneten Ventile 8, 9 und 11, 12. Über die Leitung 13 wird das von Hochsiedern befreite Deponiegas dem Adsorberpaar 3 zugeführt.

Die Regeneration des jeweils auf Desorption geschalteten Adsorbers 6 oder 7 erfolgt mit Heißgas. Dazu wird über die Leitung 14 einem Kreislauf, in den der jeweils zu desorbierende Adsorber 6, 7 eingeschaltet ist, Inertgas zugeführt Das Inertgas kann aus einer Stickstoff-PSA-Anlage stammen, die der Deponiegas-Reinigungsanlage nachgeschaltet ist. Auch das Abgas einer solchen PSA-Anlage kann als Inertgas verwendet werden. Weitere Möglichkeiten für Inertgasquellen sind ein $LN_2$-

Tank, ein $CO_2$-Erzeuger oder auch eine Quelle für gereinigtes Rauchgas.

Der Kreislauf umfaßt das Gebläse 16, den Wärmetauscher 17 und die Heizeinrichtung 18, welche sämtlich im Leitungsabschnitt 19 angeordnet sind. Mittels der Ventile 21, 22 bzw. 23, 24 wird der jeweils zu desorbierende Adsorber in den Kreislauf eingeschaltet. Weiterhin umfaßt der Kreislauf den Leitungsabschnitt 25 mit dem Dreiwege-Entlüftungsventil 26, einem mit Molekularsieb gefüllten Behälter 27, dem Dreiwegeventil 28, das Absperrventil 29 und den Kondensator 31.

Zunächst wird das Inertgas durch den zu regenerierenden Adsorber und dann über das Ventil 26 zur Atmosphäre geführt, wodurch der Adsorber gespült wird. Danach erfolgt die eigentliche Regeneration durch im Kreislauf geführtes Inertgas, wobei dieses mittels der Heizeinrichtung 18 auf ca. 180° C aufgeheizt wird. Während dieser Phase werden Feuchtigkeit und die angelagerten hochsiedenden Bestandteile desorbiert. Die Feuchtigkeit lagert sich im Molekularsiebbehälter 27 an, während die hochsiedenden Bestandteile im Kondensator 31 abgeschieden werden. Das Kondensat gelangt über einen Kondensatabscheider in den Behälter 32. Die Regenerationsdauer beträgt ca. 2 h. Nach der Regeneration wird der Adsorber mittels gereinigtem Prozeßgas von Inertgas freigespült und auf Adsorptionsdruck gebracht. Dies geschieht durch Druckausgleich mit dem in Adsorption befindlichen Behälter.

Nach der Regeneration des jeweiligen Adsorbers erfolgt die Regeneration des Molekularsiebes im Behälter 27. Das geschieht mit Luft, die über die Leitung 33, die Heizeinrichtung 34 und das Ventil 28 zugeführt wird. Abschließend wird das Molekularsieb mit Inertgas gespült, um bei der späteren Kontaktnahme mit Prozeßgas ein explosives Gemisch zu vermeiden. Vor der nächsten Desorptionsphase muß außerdem noch das Molekularsieb im Behälter 27 gekühlt werden.

Der Vorteil dieser ersten Stufe 2 liegt darin, daß die hochsiedenden Bestandteile des Deponiegases nahezu wasserfrei abgeschieden werden können. Sie können danach verbrannt werden, da es sich in der Regel im wesentlichen um Aromate handelt.

Die beiden Adsorber 41 und 42 der zweiten Stufe 3 sind mit feinporiger Aktivkohle gefüllt, die mittel- und niedrigsiedende Bestandteile bei Raumtemperaturen bindet. Sie werden ebenfalls wechselweise betrieben, was mit Hilfe der den Adsorbern 41 und 42 vor- bzw. nachgeschalteten Ventilen 43, 44 und 45, 46 erreicht wird. Die gereinigten Deponiegase verlassen die Einrichtung 1 über die Leitung 5.

Die wechselweise betriebene Regeneration der Adsorberstufen 41 und 42 erfolgt mit überhitztem Dampf aus dem Dampferzeuger 47. Dem Dampferzeuger ist ein nicht dargestelltes Regelsystem zugeordnet, das den Dampf auf ca. 1,5 bis 2 bar Druck entspannt. Bei einer Regeltemperatur von etwa 110 bis 130° C ist dieser Dampf trocken. Er wird über die Leitung 48, die Ventile 51 bzw. 52, die Ventile 53 bzw. 54 und die Leitung 55 durch den jeweils zu desorbierenden Adsorber 41 oder 42 hindurchgeleitet. Dabei heizt sich zunächst die Kohle und der Behälter des zu desorbierenden Behälters auf ca. 110 bis 130° C auf, wobei der Dampf kondensiert. Diese Phase dauert etwa 10 Minuten. Dann erfolgt für ca. 45 Minuten der eigentliche Regeneriervorgang, in dem die angelagerten Mittel- und Niedrigsieder ausgetrieben werden. Die Abscheidung erfolgt im Kondensator 56. Das abgeschiedene Kondensat gelangt in den Vorlagenbehälter 57 und von dort mittels der Pumpe 58 in den Speicherbehälter 59.

Nach der Entspannung des zu adsorbierenden Behälters auf Umgebungsdruck erfolgt die Entfernung des in der Kohle vorhandenen Wassers mittels heißen Inertgases. Dieses wird über die Leitung 61, die Heizeinrichtung 62 und die Ventile 63, 64 bzw. 65, 66 den Adsorberbehältern 41, 42 zugeführt und über die Leitung 67 in die Abluft geblasen. Danach erfolgt der Druckausgleich mit dem anderen, in Adsorption befindlichen Behälter.

Durch das beschriebene Verfahren ist es möglich, die niedrig- und mittelsiedenden Bestandteile im Deponiegas abzuscheiden. Diese werden mit dem Dampf während der Regeneration aus der Aktivkohle ausgetrieben. Teilweise sind sie im Wasser gelöst, das vom Kondensator 56 in die Vorlage 57 gelangt. Die in der Gasphase verbliebenen Niedrigsieder werden über eine Kondensatorentlüftung zur Fackel geleitet oder können, wenn sie unter den vorgeschriebenen Werten bleiben, in die Atmosphäre abgeblasen werden.

Die Vorteile der beschriebenen zweistufigen Einrichtung mit jeweils zwei Adsorbern 6, 7 bzw. 41, 42 liegen insbesondere in der trockenen Abscheidung der hochsiedenden Bestandteile sowie der davon separaten Abscheidung der mittel- und niedrigsiedenden Bestandteile, welche damit einer getrennten Behandlung unterworfen werden können. Insgesamt besteht die Möglichkeit, das Deponiegas selbst von nur in Spuren vorkommenden Bestandteilen der eingangs genannten Art zu befreien. Eine hohe Betriebssicherheit der nachfolgenden Anlagen ist dadurch gewährleistet.

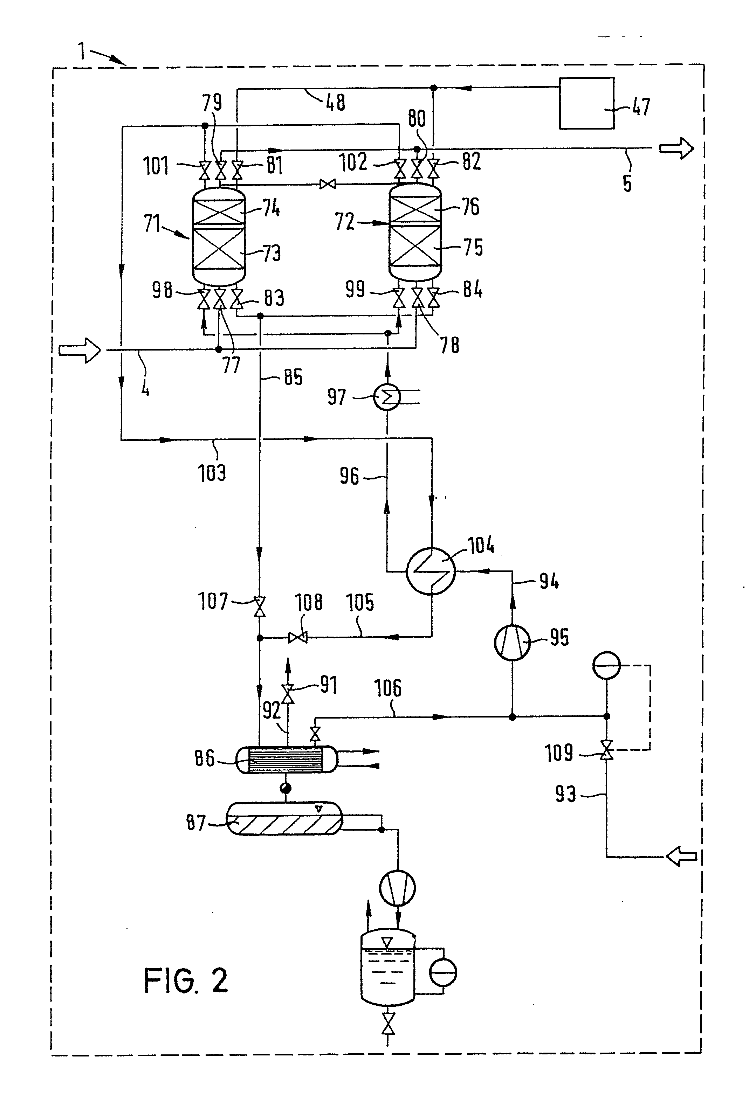

Bei dem in Fig. 2 beschriebenen Ausführungsbeispiel einer Einrichtung bzw. Anlage 1 nach der Erfindung sind nur zwei Adsorber 71 und 72 vorgesehen, die jedoch jeweils zwei Betten 73, 74 bzw. 75, 76 enthalten. Die jeweils ersten - in Strömungsrichtung der zu reinigenden Deponiegase - Betten 73 und 75 enthalten die hochaktive offenporige Aktivkohle zur Abtrennung der hochsiedenden Bestandteile. Die sich anschließenden Betten 74 und 76 bestehen aus feinporiger Aktivkohle zur Bindung der mittel- und niedrigsiedenden Bestandteile. Mittels der Ventile 77 bis 80 wird der wechselweise Betrieb der Adsorber 71 und 72 ermöglicht.

Bei dieser Anlage ist es erforderlich, die Regeneration in zwei Schritten vorzunehmen. Zunächst wird überhitzter Dampf aus dem Dampferzeuger 47 über die Leitung 48, die Ventile 81 bzw. 82, die Ventile 83 bzw. 84 und die Leitung 85 im Gegenstrom durch den jeweiligen auf Desorption geschalteten Adsorber geleitet. Die dadurch desorbierten Bestandteile, die im wesentlichen aus Niedrig- und Mittelsiedern bestehen, werden mit dem Dampf in dem nachgeordneten Kondensator 86 kondensiert und gelangen über einen Kondensatabscheider in den Vorlagenbehälter 87. Vom Kondensator 86 führt eine mit dem Ventil 91 ausgerüstete Leitung 92 zu einer Fackelanlage. Das Ventil 91 ist bei diesem ersten Regenerationsschritt geöffnet, so daß die nichtkondensierenden Gasbestandteile abgefackelt werden können.

Im Anschluß an diesen ersten Regenerationsschritt wird der auf Desorption geschaltete Adsorber mit gereinigtem Prozeßgas oder mit Inertgas (wie zu Fig. 1 beschrieben) geflutet und regeneriert. Auf ein Molekularsiebbett, wie es beim Ausführungsbeispiel nach Fig. 1, erstes Adsorberpaar 2, notwendig war, kann verzichtet werden, da es nicht erforderlich ist, die hochsiedenden Bestandteile trocken und getrennt abzuscheiden. Außerdem reicht der Trocknungsgrad der durch Heißgasregeneration mit anschließender Kühlung des Systems auf ca. 20 bis 25° C aus, da der gesamte Kreislauf relativ wenig Gasinhalt hat und daher die Restfeuchte sehr gering bleibt.

Das über die Leitung 93 zugeführte gereinigte Prozeßgas oder Inertgas wird einem Kreislauf zugeführt, der die folgenden Bestandteile hat: Leitung 94 mit dem Gebläse 95, Leitung 96 mit der Heizeinrichtung 97, Ventil 98 oder 99, Ventil 101 oder 102 (je nachdem, welcher Adsorber 71 oder 72 regeneriert werden soll), Leitungsabschnitt 103, Rekuperator 104 zur Energieeinsparung, Leitungsabschnitt 105, der in die Leitung 85 mündet, Kondensator 86 sowie Leitungsabschnitt 106. Mittels der Ventile 107(in der Leitung 85) und 108 (in der Leitung 105) wird einmal die Verbindung der Adsorber 71, 72 zum Kondensator 86 (erster Regenerationsschritt) und zum anderen der Einschluß des Kondensators 86 in den Kreislauf (zweiter Regenerationsschritt) geregelt.

Das über die Leitung 93 eingeströmte Prozeßgas oder Inertgas wird in der Heizung 97 auf 180° C aufgeheizt und dann mittels des Gebläses 95 in dem beschriebenen Kreislauf gefördert. Nach der Füllung des Kreislaufs wird das Ventil 109 im Leitungsabschnitt 93 geschlossen. Durch das Heißgas werden auf dem Adsorbens verbliebene Hochsieder desorbiert, und das Adsorbens wird getrocknet. Das die desorbierten Bestandteile enthaltende Heißgas strömt durch den Rekuperator 104, wodurch das vom Kondensat befreite und gekühlte Kreislaufgas erwärmt wird (Energieeinsparung), bevor es zum Erhitzer 97 strömt, in den es auf Regenerationsendtemperatur gebracht wird. Das Heißgas erfährt dadurch eine starke Abkühlung. Danach gelangt das Heißgas in den Kondensator 86, in dem die hochsiedenden Bestandteile sowie Feuchtigkeit bis zur Gleichgewichtsgrenze auskondensiert werden. Die Restfeuchte des gekühlten Gases ist gering und genügt den Prozeßanforderungen.

Der wesentliche Vorteil der beschriebenen einstufigen Anlage besteht in der drastischen Reduzierung der Investitionskosten.

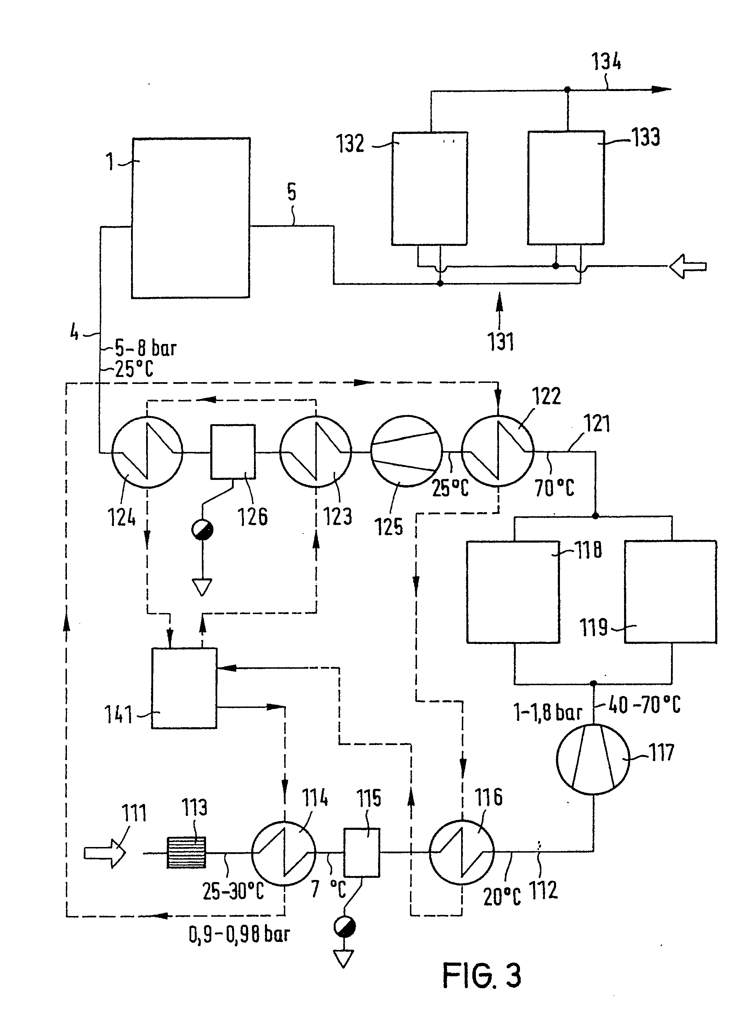

Fig. 3 zeigt ein Ausführungsbeispiel, das im wesentlichen Einrichtungen zeigt, die der eigentlichen Anlage 1 zur Abscheiung der hoch-, mittel- und niedrigsiedenden Bestandteile vor- bzw. nachgeschaltet sind. Das Roh-Deponiegas tritt bei 111 in einen Leitungsabschnitt 112 ein, in den nacheinander ein Filter 113, eine Kühleinrichtung 114, ein Demistor (Feuchtigkeitsabscheider) 115, ein Gaserwärmer 116 sowie ein Gebläse 117 eingeschaltet sind. Daran schließen sich zwei parallelgeschaltete Behälter 118 und 119 mit Aktivkohle an, die der Schwefelwasserstoff ($H_2S$)-Abscheidung dienen. In dem sich daran anschließenden Leitungsabschnitt 121 sind weitere drei Wärmetauscher 122, 123 und 124 eingeschaltet, zwischen denen ein Gebläse 125 - vorzugsweise ein Wälzkolben-Gebläse, das das Gas auf ca. 1,8 bar verdichtet - und ein weiterer Demistor 126 angeordnet sind. Die Versorgung der Wärmetauscher 114, 116 sowie 122 bis 124 erfolgt von einem zentralen Kaltwassersatz, was insgesamt den Vorteil einer Minimierung des Energieaufwandes hat.

Zur Vorreinigung bzw. Vorbehandlung durchströmt das Deponie-Rohgas zunächst den Filter 113, in dem es von grobem Schmutz befreit wird. Danach wird es im Wärmetauscher 114 auf 7° C abgekühlt und mit Hilfe des sich anschließenden Demistors getrocknet. Im sich anschließenden Wärmetauscher 116 und Gebläse 117 erfolgt eine Erwärmung des Gases auf ca. 40 bis 70° C. Diese Temperatur ist besonders geeignet für die anschließende $H_2S$-Abscheidung in dem jeweils eingeschalteten Adsorber 118 oder 119. Es wird dabei ein Festbett-Verfahren angewendet, in dem an Aktivkohle Schwefelwasserstoff in einem Schritt zu elementarem Schwefel umgewandelt wird. Das geschieht unter im einzelnen nicht dargesteller Zufuhr von Sauerstoff nach der Formel

$$H_2S + O_2 = 1/4\ S_8 + 2H_2O.$$

Der Schwefel lagert sich auf der inneren Oberfläche der Aktivkohle ab.

Eine weitere Verfahrensvariante ist an dieser Stelle einsetzbar. Hierbei handelt es sich um ein Festbett-Verfahren, in dem an Eisenoxid imprägnierter Aktivkohle unter chemischer Reaktion Schwefelwasserstoff in Aktivkohle gebunden wird. Bei beiden Verfahren werden in Abhängigkeit der Schwefelstoffanalyse entweder ein oder zwei Festbetten vorgesehen, wobei bei Verwendung von zwei Festbetten diese hintereinandergeschaltet werden, um bei einem Durchbruch des einen Adsorbers kontinuierlich weiterarbeiten zu können.

Nach der $H_2S$-Abscheidung wird das Gas im Kühler 122 auf Umgebungstemperatur abgekühlt. Danach könnte es direkt der Anlage 1 zugeführt und von niedrig-, mittel- und hochsiedenden Bestandteilen befreit werden. Bei dem in Fig. 3 dargestellten Ausführungsbeispiel schließen sich jedoch an den Wärmetauscher 122 der Kompressor 125 sowie die weiteren Wärmetauscher 123 und 124 mit dem dazwischen angeordneten Demistor 126 an. Mit dem Kompressor (vorzugsweise ein einstufiger trockenlaufender Schraubenkompressor) wird das Gas auf 5 bis 8 bar verdichtet, wodurch die sich anschließende Kühlung in den Wärmetauschern 123 und 124 sowie Trocknung im Demistor 126 vor der Einleitung in die Anlage 1 über die Leitung 4 erforderlich werden.

Die Verdichtung des Gases ist erforderlich, weil sich an die Anlage 1 eine generell mit 131 bezeichnete PSA-Anlage - wie sie z. B. in der EP-A-38 410 beschrieben wird - anschließt. In den beiden wechselweise betriebenen Adsorbern 132 und 133 wird das Methan angereichert, d. h. von Stickstoff befreit. Das aus der PSA-Anlage über die Leitung 134 verlassende Gas ist wasserfrei und hat einen Taupunkt von ca. -40° C. Weiterhin sind Schwefelwasserstoffe und Halogenwasserstoffe nicht mehr vorhanden, so daß das Gas den nachgeschalteten Verbrauchern zugeführt werden kann.

Beim Ausführungsbeispiel nach Fig. 3 sind der Reinigungsanlage 1 insgesamt fünf Wärmetauscher 114, 116, 122 bis 124, vorgelagert, die zur Kühlung und Wiederaufwärmung der zu reinigenden Deponiegase verwendet werden. Zweckmäßig ist es dazu, diesen Wärmetauschern nur ein Versorgungsgerät (Aggregat 141) zuzuordnen. Dadurch wird es möglich, diese Einrichtungen energiesparend zu betreiben. Eine Energiezufuhr ist nicht oder kaum mehr notwendig, wenn das zu behandelnde Gas im ersten Wärmetauscher 114 von Umgebungstemperatur auf 7° C abgekühlt und im zweiten Wärmetauscher 116 auf 20° C erwärmt wird. Im Gebläse 117, welches das Gas auf ca. 1,8 bar verdichtet, erfolgt eine Erwärmung auf 40 bis 70° C. Diese Temperatur ist für die $H_2S$-Abscheidung zweckmäßig. Im sich daran anschließenden Wärmetauscher 122 wird das Gas wieder auf Umgebungstemperatur abgekühlt und entweder direkt der Reinigungsanlage 1 zugeführt; ist der Reinigungsanlage 1 die Methan-Anreicherung 131 nachgeordnet, wird das Gas mit Hilfe des Kompressors 125 auf 5 bis 8 bar verdichtet. Die gleichzeitig dadurch entstehende Wärme wird durch die Wärmetauscher 123 und 124 wieder abgeführt, so daß das Gas mit etwa 25° C in die Reinigungsanlage 1 gelangt. Bei diesen Temperaturwerten sind zweckmäßigerweise die Wärmetauscher 114, 122 und 116 - in dieser Reihenfolge - in einem Kreislauf angeordnet. In einem zweiten sind die beiden Wärmetauscher 123 und 124 eingeschaltet.

## Patentansprüche

1. Verfahren zur Reinigung und Anreicherung von Deponiegasen, bei dem nacheinander die folgenden Schritte durchgeführt werden

    a) das Rohgas wird getrocknet, erwärmt, von Schwefelwasserstoff befreit und gekühlt;

    b) das nach a) vorbehandelte Gas wird auf einige Bar komprimiert und gekühlt;

    c) das Gas wird danach durch einen ersten Adsorber eines wechselweise betreibbaren und regenerierbaren Adsorberpaares (6, 7, 73, 75) geleitet, in dem Aromate und andere hochsiedende Verunreinigungen an offenporiger Aktivkohle abgeschieden werden;

    d) das den ersten Adsorber verlassende Gas wird durch einen zweiten Adsorber eines wechselweise betreibbaren und regenerierbaren Adsorberpaares (41, 42, 74, 76) geleitet, in dem die mittel- und niedrigsiedenden Verunreinigungen an feinporiger Aktivkohle abgeschieden werden;

    e) das den zweiten Adsorber (41, 42, 74, 76) verlassende Gas wird einer Einrichtung zur Methan-Anreicherung zugeführt.

2. Verfahren nach Anspruch 1, dadurch gekennzeichnet, daß die Methan-Anreicherung, d. h. die Befreiung des Methans von Stickstoff, in einer an sich bekannten PSA-Anlage erfolgt.

3. Verfahren nach Anspruch 1 oder 2, dadurch gekennzeichnet, daß das erste Adsorberpaar (6, 7) mit trockenem Heißgas, beispielweise Stickstoff, $CO_2$ oder gereinigtes Rauchgas, und das weitere Adsorberpaar (41, 42) mit Heißdampf regeneriert werden.

4. Verfahren nach Anspruch 1 oder 2, dadurch gekennzeichnet, daß im Falle von jeweils zwei in einem Behälterpaar untergebrachten Adsorberbetten (73, 74; 75, 76) die Regeneration in zwei Schritten erfolgt, und zwar zunächst durch überhitzten Dampf im Gegenstrom und dann mittels Heißgas.

5. Verfahren nach einem der Ansprüche 3 oder 4, dadurch gekennzeichnet, daß zur Regenerierung heißes Inertgas beispielsweise Stickstoff, CO₂ oder gereinigtes Rauchgas, verwendet wird.

6. Verfahren nach Anspruch 2 und Anspruch 5, dadurch gekennzeichnet, daß der in der PSA-Anlage entstehende Stickstoff zur Regenerierung verwendet wird.

7. Vorrichtung zur Durchführung des Verfahrens nach einem der vorhergehenden Ansprüche, dadurch gekennzeichnet, daß zwei nacheinander durchströmte, wechselweise betriebene Adsorberpaare (6, 7 bzw. 41, 42) oder Adsorberbettpaare (73, 75 bzw. 74, 76) vorgesehen sind, daß dem ersten Adsorberpaar (6, 7) ein Kreislauf zur Regeneration mittels Heißgas zugeordnet ist, daß dem zweiten Adsorberpaar (41, 42) Einrichtungen (47) zur Regeneration mittels Heißdampf zugeordnet sind und daß den Adsorbern (6, 7, 41, 42) eine Einrichtung (118, 119) zur Entfernung von Schwefelwasserstoff sowie mehrere Wärmetauscher zur Abkühlung und Wiederaufwärmung des Rohgases vorgelagert sind und zwischen der Einrichtung (118, 119) zur Entfernung von Schwefelwasserstoff und dem ersten Adsorberpaar (6, 7; 73, 75) ein Gebläse (117) und ein Kompressor (125) zur Verdichtung des Gases auf ca. 8 bar angeordnet sind und daß dem zweiten Adsorberpaar (41, 42, 74, 76) eine Einrichtung (131) zur Anreicherung des Methans, vorzugsweise eine PSA-Anlage, nachgeordnet ist.

8. Vorrichtung nach Anspruch 7, dadurch gekennzeichnet, daß die Einrichtung zur Entfernung von Schwefelwasserstoff zwei wechselweise betriebene Behälter (118, 119) umfaßt.

9. Vorrichtung nach Anspruch 8, dadurch gekennzeichnet, daß das Gebläse (117) als Wälzkolbengebläse und der kompressor (125) als einstufiger, trockenlaufender Schraubenkompressor ausgebildet sind.

10. Vorrichtung nach Anspruch 9, dadurch gekennzeichnet, daß die Einrichtung (118, 119) zur Entfernung von Schwefelwasserstoff zwischen dem Gebläse (117) und dem Kompressor (125) angeordnet ist.

11. Vorrichtung nach Anspruch 10, dadurch gekennzeichnet, daß Wärmetauschern nur ein Versorgungsgerät (141) zugeordnet ist.

## Claims

1. A process for purifying and enriching deposition gases, in which the following steps are executed:

   a) the untreated gas is dried, heated, cleansed of hydrogen sulphide and cooled;

   b) the gas pretreated as described in a) is compressed to several bar and cooled;

   c) the gas is then passed through a first adsorber belonging to an alternately useable and rechargeable adsorber pair (6, 7, 73, 75), in which aromatic hydrocarbons and other high-boiling impurities are separated using open-pore activated carbon;

   d) the gas exiting from the first adsorber is passed through a second adsorber belonging to an alternately useable and rechargeable adsorber pair (41, 42, 74, 76), in which the medium and low-boiling impurities are separated by means of fine-pored activated carbon;

   e) the gas exiting the second adsorber (41, 42, 74, 76) is fed to a device for methane enrichment.

2. A process according to claim 1, characterized in that the methane enrichment, i.e. the removal of nitrogen from the methane, is carried out in a PSA plant of known design.

3. A process according to claim 1 or 2, characterized in that the first adsorber pair (6, 7) is regenerated with dry hot gas, for example, nitrogen, CO₂ or purified waste gas, and that the further adsorber pair (41, 42) is regenerated with superheated steam.

4. A process according to claim 1 or 2, characterized in that, in the case of two adsorption beds (73, 74; 75, 76) installed in each vessel pair, regeneration is carried out in two steps, first by means of superheated steam in counterflow and subsequently by means of hot gas.

5. A process according to one of the claims 3 or 4, characterized in that hot inert gas, for example, nitrogen, CO₂ or purified waste gas, is used for regeneration.

6. A process according to claim 2 and claim 5, characterized in that the nitrogen formed in the PSA plant is used for regeneration.

7. An apparatus for carrying out the process according to one of the above claims, characterized in that two sequential, alternately operating adsorber pairs (6, 7 and 41, 42) or adsorber bed pairs (73, 75 and 74, 76) are provided, that the first adsorber pair (6, 7) is provided with a circulation system for regeneration by means of hot gas, that the second adsorber pair (41, 42) is provided with a device (47) for regeneration by means of superheated steam, that the adsorbers (6, 7, 41, 42) are provided with a device (118, 119) for the removal of hydrogen sulphide as well as with several heat exchangers for cooling and reheating the crude gas located directly in front of the adsorbers, that a blower (117) and a compressor (125) are installed between the device (118, 119) for removal of hydrogen sulphide and the first adsorber pair (6, 7; 73, 75) for compressing the gas to approximately 8 bar and that a device (131) for enriching the methane, preferably a PSA plant, is installed following the second adsorber pair (41, 42, 74, 76).

8. An apparatus according to claim 7, characterized in that the device for removal of hydrogen sulphide comprises two alternately operated vessels (118, 119).

9. An apparatus according to claim 8, characterized in that the blower (117) is constructed as a Roots blower and the compressor (125) is designed as a single-stage, dry-running screw-type compressor.

10. An apparatus according to claim 9, characterized in that the device (118, 119) for removal of hydrogen sulphide is installed between the blower (117) and the compressor (125).

11. An apparatus according to claim 10, characterized in that only a single power supply (141) is provided for operation of the heat exchangers.

**Revendications**

1. Procédé pour la purification et l'enrichissement des gaz de décharge au cours duquel les étapes suivantes seront réalisées successivement
   a) le gaz brut est desséché, chauffé, libéré de son acide sulfhydrique puis refroidi;
   b) le gaz traité selon a) est comprimé à quelques bars puis refroidi;
   c) le gaz est ensuite conduit à travers un premier adsorbant d'une paire d'adsorbants dont l'action alterne avec la régénération (6, 7, 73, 75) et dans laquelle sont séparés des aromates et autres impuretés à haut point d'ébullition à l'aide de charbon actif à pores ouverts;
   d) le gaz qui quitte le premier adsorbant est conduit à travers un second adsorbant d'une paire d'adsorbants dont l'action alterne avec la régénération (41, 42, 734, 76) et dans laquelle sont séparées les impuretés à point d'ébullition moyennement élevé et à bas point d'ébullition à l'aide de charbon actif à pores fins;
   e) le gaz qui quitte le deuxième adsorbant (41, 42, 74, 76) est délivré à un dispositif prévu pour l'enrichissement du méthane.

2. Le procédé selon la spécification 1 est caractérisé par le fait que l'enrichissement du méthane, c.-à-d. la libération de l'azote contenu dans le méthane, a lieu dans une installation PSA (pressure swing adsorption) connue en soi.

3. Le procédé selon la spécification 1 ou 2 est caractérisé par le fait que la première paire d'adsorbants (6, 7) est régénérée avec du gaz chaud sec tel que de l'azote, du $CO_2$ ou du gaz de fumée purifié alors que la deuxième paire d'adsorbants (41, 42) est régénérée avec de la vapeur surchauffée.

4. Le procédé selon la spécification 1 ou 2 est caractérisé par le fait que si deux masses adsorbantes (73, 74; 75, 76) sont placées dans chacun des deux réservoirs, la régénération s'effectue en deux étapes, la première par surchauffage de la vapeur à contre-courant et la seconde à l'aide d'un gaz chaud.

5. Le procédé selon l'une des spécifications 3 ou 4 est caractérisé par le fait que du gaz inerte chaud, par exemple de l'azote, du $CO_2$ ou du gaz de fumée purifié, est utilisé pour la régénération.

6. Le procédé selon la spécification 2 et la spécification 5 est caractérisé par le fait que l'azote qui se forme dans l'installation PSA est utilisé pour la régénération.

7. Le dispositif pour la réalisation du procédé selon l'une des spécifications citées précédemment est caractérisé par le fait qu'il est prévu deux paires d'adsorbants (6, 7 ou 41, 42) ou deux fois deux masses adsorbantes (73, 75 ou 74, 76) traversées successivement et agissant alternativement, qu'il est assigné à la première paire d'adsorbants (6, 7) un système de circulation pour la régénération à l'aide d'un gaz chaud, qu'il est assigné à la deuxième paire d'adsorbants (41, 42) des installations (47) pour la régénération à l'aide de vapeur surchauffée, qu'il se trouve devant les adsorbants (6, 7, 41, 42) une installation (118, 119) pour l'élimination de l'acide sulfhydrique ainsi que plusieurs échangeurs thermiques pour le refroidissement et le réchauffement du gaz brut, qu'il est placé une soufflerie (117) et un compresseur (125) pour la compression du gaz à environ 6 bars entre l'installation (118, 119) pour l'élimination de l'acide sulfhydrique et la première paire d'adsorbants (6, 7; 73, 75) et qu'il est placé derrière la deuxième paire d'adsorbants (41, 42, 74, 76) une installation (131) pour l'enrichissement du méthane, de préférence une installation PSA.

8. Le dispositif selon la spécification 7 est caractérisé par le fait que l'installation pour l'élimination de l'acide sulfhydrique comprend deux réservoirs (118, 119); soit l'un, soit l'autre de ces réservoirs sera utilisé.

9. Le dispositif selon la spécification 8 est caractérisé par le fait que la soufflerie (117) est conçue comme une soufflerie de Roots et le compresseur (125) comme un compresseur à vis, à un étage et à piston sec.

10. Le dispositif selon la spécification 9 est caractérisé par le fait que l'installation (118, 119) pour l'élimination de l'acide sulfhydrique est placée entre la soufflerie (117) et le compresseur (125).

11. Le dispositif selon la spécification 10 est caractérisé par le fait qu'il n'est assigné qu'une seule alimentation (141) aux échangeurs thermiques.

FIG.1

FIG. 2

**FIG. 3**